# EUROPEAN PATENT APPLICATION

(11) **EP 0 992 336 A1**
(43) Date of publication of application: **12.04.2000**
(21) Application number: 99307739.5
(22) Date of filing: 30.09.1999
(51) Int. Cl.: B29C 70/44

(54) **Method of manufacturing a resin impregnated reinforced article**

(30) Priority: 08.10.1998 US 168662
(71) Applicant: THE B.F. GOODRICH COMPANY, Richfield, Ohio 44286-9368 (US)
(72) Inventor: Robinson, John William, Fernandina Beach, Florida 32034 (US)
(74) Representative: Foster, David Martyn

(57) **Abstract**

A method of manufacturing a resin impregnated reinforced article includes laying up a permeable reinforcing material (52) on a rigid mold (50) and covering the material (52) with a plurality of semi-rigid, impervious tool segments (56,58). Gaps (64) between the tool segments (56,58) are bridged with couplers (66) disposed between the material (52) and the tool segments (56,58). The tool (56,58) and material (52) are then sealed from the atmosphere with flexible, impervious bagging material (80,82) and placed under vacuum. Resin is introduced in the bag for impregnating the material (52) with the resin.

## Description

### Field of the Invention:

The present invention relates to a method of manufacturing resin impregnated reinforced articles, preferably fiber composites. The method preferably includes using a semi-rigid tool.

### Background of the Invention:

Fiber reinforced composite parts are fabricated utilizing a variety of conventional techniques including resin infusion, resin transfer molding (RTM), prepreg/autoclave procedures, and compression molding operations. Resin infusion consists of infusing a preform with liquid resin under vacuum using a one sided tool. Resin transfer molding differs from resin infusion by infusing the preform with liquid resin under pressure with or without vacuum using a matched, two sided tool capable of withstanding the pressure. Fiber reinforced plastic structures have been commercially produced for some years. Examples of manufacturing techniques can be found in US Patent No. 5,052,906 Entitled "Plastic Transfer Molding Apparatus For The Production of Fiber Reinforced Plastic Structures", US Patent No. 5,601,852 Entitled "Unitary Vacuum Bag For Forming Fiber Reinforced Composite Articles And Process For Making Same", US Patent No. 4,132,755 Entitled "Process For Manufacturing Resin-Impregnated, Reinforced Articles Without The Presence Of Resin Fumes", US Patent No. 5,129,813 Entitled "Embossed Vacuum Bag, Methods For Producing And Using Said Bag", US Patent No. 4,902,215 Entitled "Plastic Transfer Molding Techniques For The Production Of Fiber Reinforced Plastic Structures", US Patent No. 4,942,013 Entitled "Vacuum Resin Impregnation Process", US Patent No. 5,439,635 Entitled "Unitary vacuum Bag For Forming Fiber Reinforced Composite Articles And Process For Making Same", US Patent No. 5,281,388 Entitled "Resin Impregnation Process For Producing A Resin-Fiber Composite", US Patent No. 5,316,462 Entitled "Unitary Vacuum Bag For Forming Fiber Reinforced Composite Articles, and US Patent No. 2,913,036 Entitled Process And Apparatus For Molding Large plastic Structures",

The process for producing these structures requires the incorporation of a resin or other flowable plastic material into a reinforcing fiber. Reinforcing fiber generally takes the form of one or more layers of a woven or felted fiber reinforcement, typically comprised of carbon, graphite, or fiberglass. The resin infusion or impregnation process is usually done by either a wet or dry fiber lay-up technique. In the wet fiber lay-up process, the resin "wetted" fiber reinforcement consists of a prepreg which already contains a resin and is laid up on a mold and cured.

In the dry lay-up process, the fiber reinforcement is laid up dry on a mold or form which serves as a mold. The form may be incorporated as part and parcel of the finish product. Thereafter, the fiber is sprayed, brushed, impregnated, infused, or otherwise coated or "wetted" with the resin. The resin is then cured to form the fiber reinforced plastic structure.

During the curing stage of either process, the structure can be placed in a vacuum to assist the curing process. To this end, vacuum bag techniques have been used to provide such vacuum assistance. In a vacuum technique, a flexible impervious sheet, liner, or bag is used to cover a single mold which contains the dry or wet (resin impregnated) fiber lay-up. In the wet fiber process, the edges of the flexible sheet are clamped against the mold to form an envelope and seal the resin impregnated fiber lay-up to the mold and out of the atmosphere. A vacuum is then applied to consolidate the preform during the cure of the resin. In the dry fiber lay-up, catalyzed liquid plastic or resin is generally introduced into the envelope or bag interior to wet the dry fiber, usually using a vacuum to help push the resin into the bag and wet out the dry fiber. Vacuum is applied to the bag interior via a vacuum line to collapse flexible sheet against the fiber and surface of the mold, while the plastic wetted fiber is processed, compacted and cured to form the fiber reinforced structure. The vacuum bag used in this process is critical because it provides not only a vacuum seal but also a distribution mechanism for moving the liquid resin over the preform. These flexible bags are difficult to work with and although some are considered to be reusable, are typically inadequate for large volume manufacturing production. Also, flexible bags do not perform adequately when used by themselves for processing complex three dimensional shapes. It has been found that flexible bags do not conform entirely to the reinforced structure around corners and other high radius curves. "Bridging" is a term used to describe this condition. When the flexible bag bridges across corners, a gap or void is created between the bag and the reinforced structure, thereby preventing a continuous, uniform distribution of resin.

What is needed then is a technique for a resin infusion process for complex shapes which can be used repeatedly, applied quickly, is reliable in holding perfect vacuum and provides uniform resin distribution. Efforts in this area have lead to continuing developments to improve their versatility, practicality and efficiency.

### Disclosure of the Invention:

An object of the present invention is to provide a resin infusion process which permits the processing of complex three dimensional shapes.

According to an aspect of the present invention, a method of manufacturing a resin impregnated reinforced article comprises the steps of: depositing a permeable reinforcing material on a rigid mold; covering a portion of the material with a plurality of semi-rigid, impervious tool segments; bridging gaps between tool segments with couplers disposed between the material and the tool segments; sealing the material from the atmosphere with a flexible, impervious sheet; placing the material under vacuum; and, impregnating the material with resin.

The present invention provides a cost effective resin infusion process for making complex, three-dimensional shapes. Additionally, the present invention requires a minimum amount of parts, and is easily adaptable to prior resin infusion processes. The present process can be used repeatedly, applied quickly, is reliable in holding perfect vacuum and provides uniform resin distribution.

The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### Brief Description of the Drawings:

Fig. 1A is an isometric view of a rigid mold for use in the resin infusion process in accordance with the present invention.

Fig. 1B is a side view of Fig. 1A taken along line 1A-1A.

Fig. 2A is an isometric view of the mold in Fig. 1A, having reinforced material disposed thereon.

Fig. 2B is a side view of Fig. 2A, taken along line 2A-2A.

Fig. 3A is an isometric view of the assembly in Fig. 2A, having semi-rigid tool segments provided thereon in accordance with the present invention.

Fig. 3B is a side view of Fig. 3A, taken along line 3A-3A.

Fig. 3C is an enlarged top view of the area of the assembly in Fig. 3A around the gap tool segment gap.

Fig. 4A is an isometric view of the assembly shown in Fig. 3A, further having a sealing bag provided thereon.

Fig. 4B is a side view of Fig.4A, shown along line 4A-4A.

Fig. 4C is an enlarged top view of the area of the assembly in Fig. 4A around the gap tool segment gap.

Fig. 5 is an enlarged isometric view of a portion of a semi-rigid tool and reinforced material in accordance with the present invention.

Fig. 6 is an enlarged, plan view of a portion of an alternative embodiment of a semi-rigid tool in accordance with the present invention.

Fig. 7 is an enlarged isometric view of a portion of an alternative embodiment semi-rigid tool in accordance with the present invention.

### Best Mode for Carrying Out the Invention:

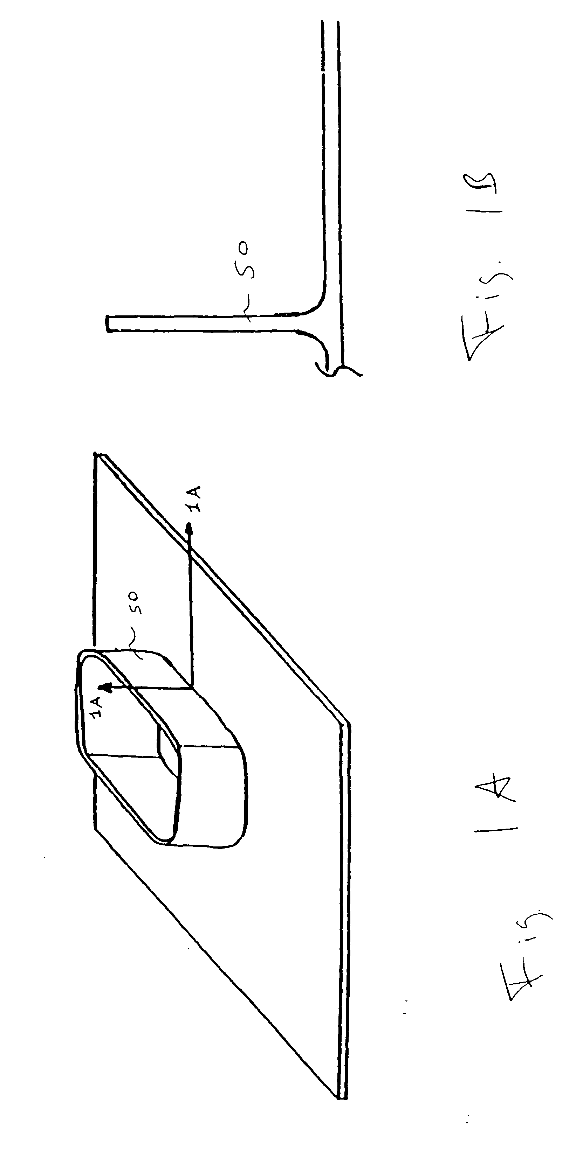

Referring now to the drawings wherein like reference numerals designate like or corresponding parts throughout different views, there is shown in Figs. 1A and 1B, a mold (or tool or film layer, etc.) on which a permeable, fibrous reinforcing substrate is to be placed to form a finished part. The mold is preferably rigid for durability. The shape of the mold determines the shape of the finished part, and thus the mold can be curved or of any desired shape.

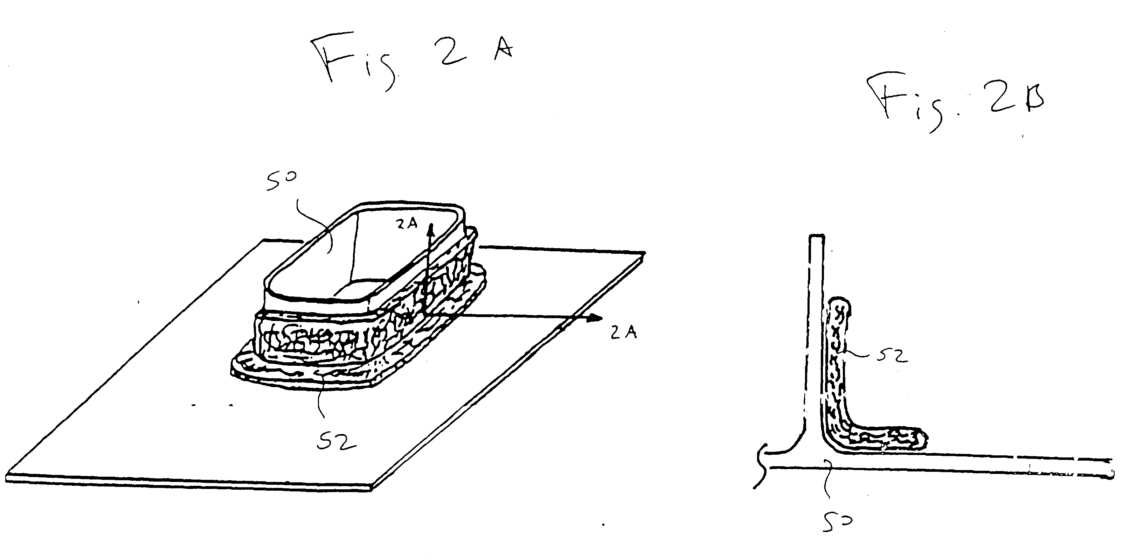

Referring now to Fig. 2A and 2B, a permeable sheet 52 of reinforced or reinforcing fibrous material is placed on top of the mold 50. Sheet 52 is preferably a laminate or preform. The laminate 52 is laid up onto the mold 50 in the shape of the mold 50. The laminate 52 is preferably in the form of a preformed cloth. However, other types of reinforcing material structures known in the art, such as woven roving mat, continuous roving mat or chopped mat may be used instead of or in addition to the cloth. Furthermore, chopped fibers, continuous roving or certain aggregate fillers can also be used for this laminate if desired. The material for the reinforcing cloth or fibers may be any of a number of materials known in the art for RTM purposes, such as carbon, fiberglass, kevlar, nylon, graphite or the like.

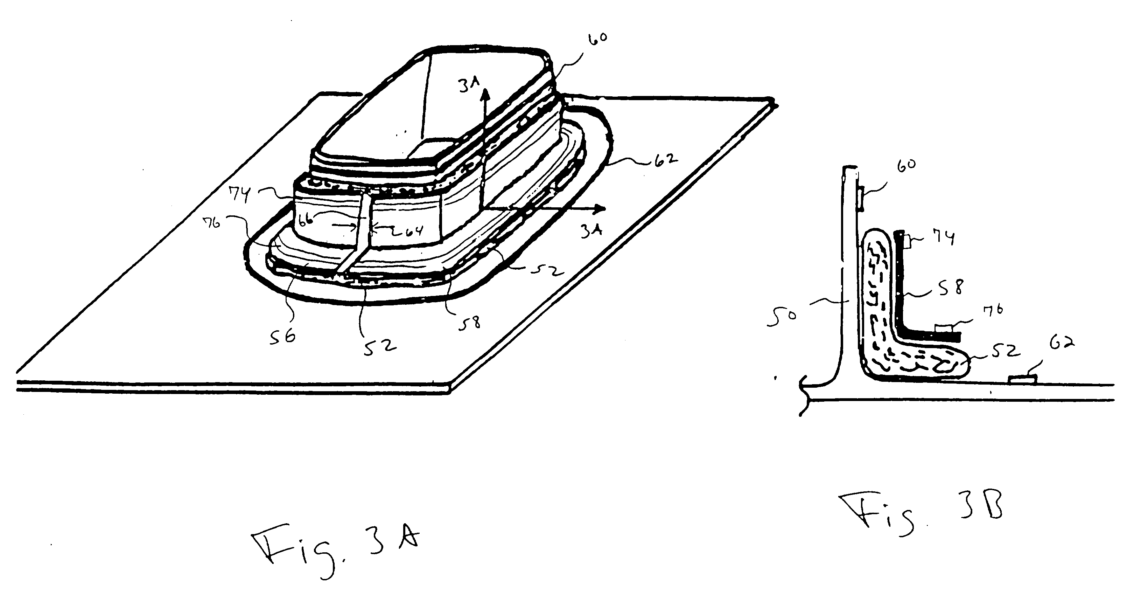

Referring now to Fig. 3A , 3B and 3C, a pair of outer tool segments 56, 58 are thereafter placed on the outer surface of the reinforced material 52. Tools 56, 58 are formed generally in the shape of the mold 50 so as to press and form the laminate to the mold when placed under vacuum. Strips 60, 62 of tacky tape are adhered on the mold above and below the reinforced material 50, respectively for sealing the laminate from atmosphere. Strips 74, 76 of tacky tape are adhered at the top and bottom of the tool segments, respectively, also for sealing the laminate from atmosphere.

A gap 64 is present between the tool segments 56, 58. A similar gap (not shown) is present on the other side of the mold. The gap provides for movement of the tool segments 56, 58 when they are placed under vacuum. Movement of the tool segments facilitates an even force to be distributed on the reinforced material around the complex, three-dimensional shape of the mold.

A bridge, joint or coupler 66 bridges each gap 64 and is disposed between the tool segments and the laminate 52. The gaps 64 and couplers 66 perform the same function as the tool segments while allowing movement of the segments 58 to thereby facilitate even pressure distribution on the laminate while under vacuum.

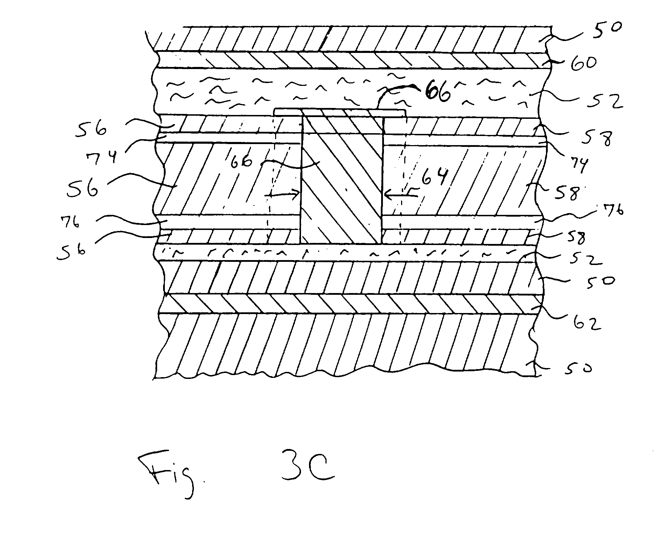

Referring now to Figs. 4A and 4B, a resin feed line 68 and a vacuum/return line 70 are disposed in close proximity to bottom and top of the laminate 52, respectively. Movement of resin into the assembly will be in the direction of the arrows shown. Vacuum line 70 is preferably placed in a continuous loop around the entire mold. Feed line 68 need not necessarily placed completely around the mold, but must be placed in such a manner so as to facilitate an even distribution of resin through the entire laminate. The required placement and amount of feed line is thus determined on a case to case basis depending on the particular structure being manufactured. A strip of tacky tape 74 is placed near the top edge of tool segments 56, 58. A strip of tacky tape 76 is placed near the bottom edge of tool segment 56, 58.

Sheets 80, 81 or strips of flexible, impermeable bag material are placed over the top of the reinforced material and adhered to the tacky tape strips (60, 74 for segment 58) so as to seal the top of the mold 50 to the tops of the tool segments 56, 58. A bottom impermeable sheet 82 is adhered to the tacky tape strips (62, 76 for segment 58) at the bottom of the tool segments 56, 58 so as to seal the bottom of the mold 50 to the bottom of the tool segments.

Referring now to Fig. 4C, bagging material sections 80, 81, 82 are sealed between the mold 50 and the semi-rigid tool segments 56, 58 utilizing the tacky tape. Additional strips of tacky tape 88, 89, 90 and 91 are adhered on top of the bagging material sections 80, 81, 82 and semi-rigid tool segments 56, 58 and mold 50. A section of bagging material 86 is thereafter adhered or sealed to the tape sections to thereby completely seal the gap 64 across the semi-rigid tool segments 56, 58. The preform is thereby completely sealed within a chamber or envelope 59.

The resin infusion process of the present invention is conducted as follows. After assembly of the mold, preform, semi-rigid tool, and bagging material, a vacuum is created via vacuum line 70. The vacuum removes air from the envelope and collapses the bagging material. The pressure differential across the envelope urges the semi-rigid tool segments toward each other by sliding across the couplers and against the surface of the laminate or preform. Resin is introduced via feed line 68 into the collapsed envelope 59 and will thereafter flow from the bottom of the mold 50 to the top of the mold and impregnate the preform 52 with the resin material.

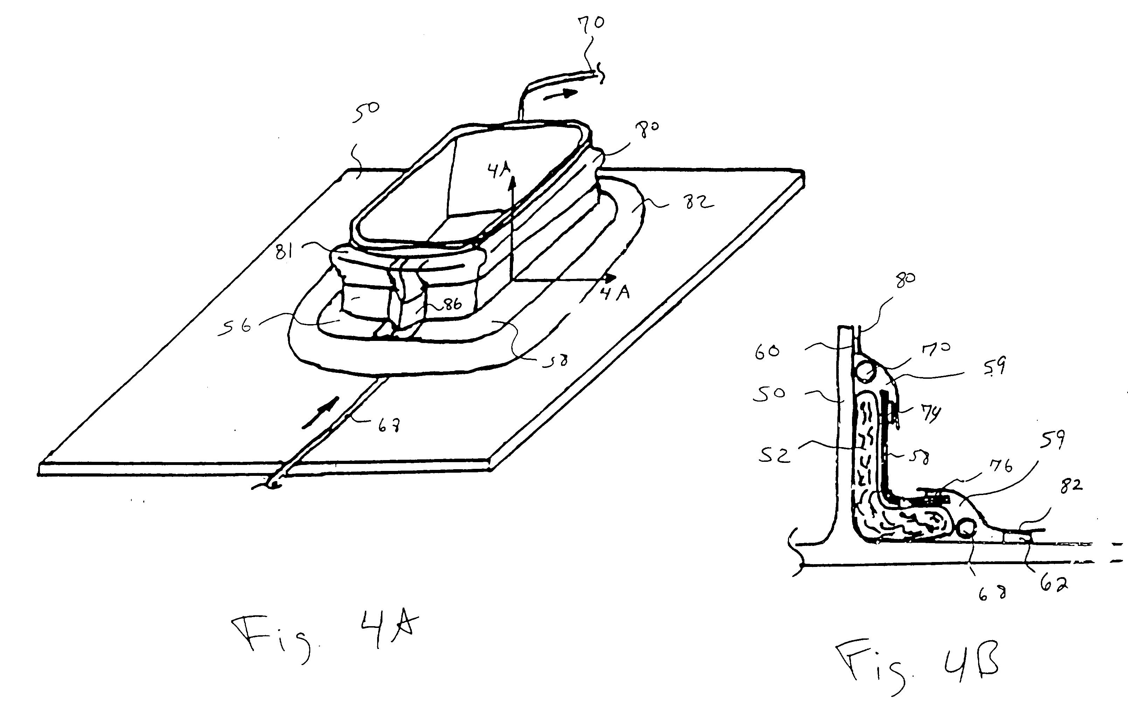

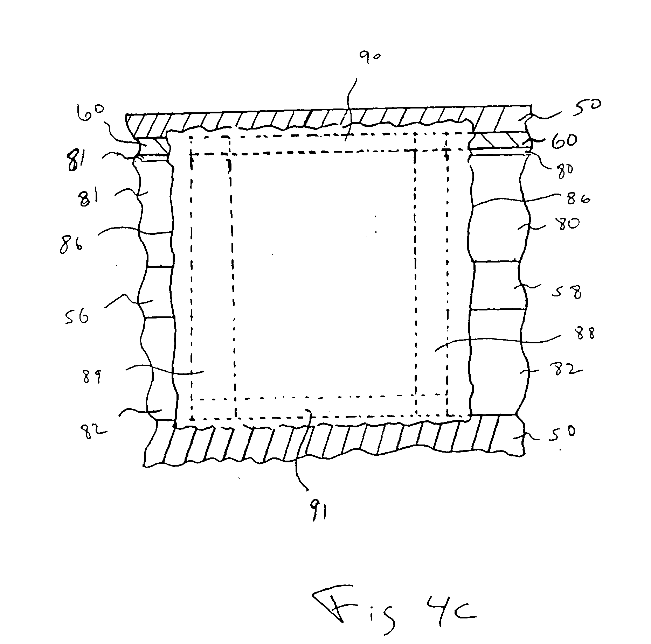

Referring now to Fig. 6, there is shown an isometric view of a section of a semi-rigid tool in accordance with the present invention. A pattern of lines, channels or indentations 110 are either formed or machined into the surface of the semi-rigid tool 108 which lies against the laminate. The pattern of interconnected channels 110 permits or facilitates the resin to flow in a more even distribution across the face of the preform 112.

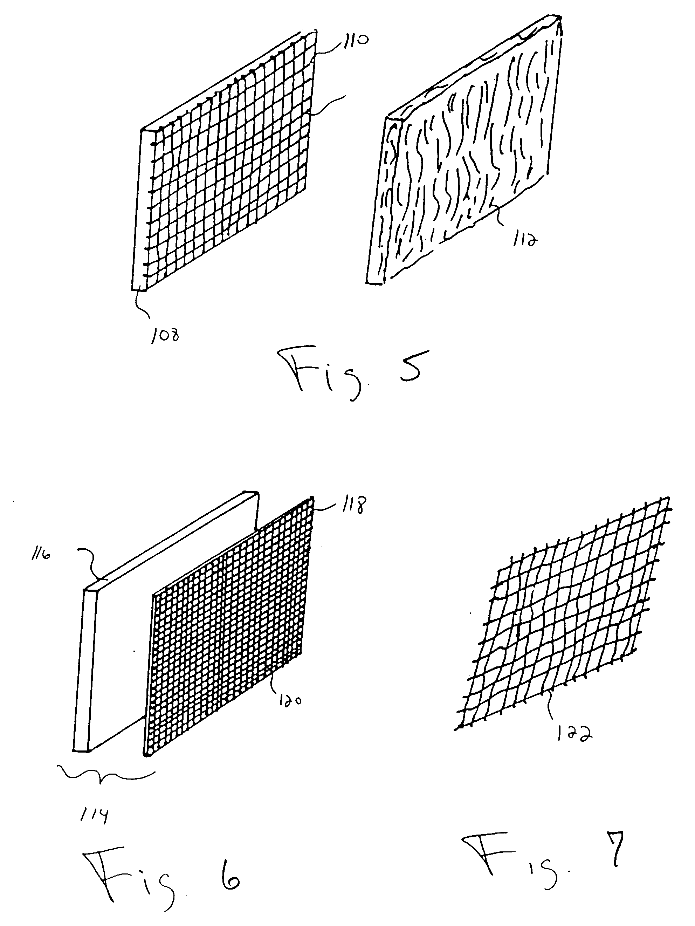

Referring now to Fig. 7, alternatively from the tool of Fig. 6, a tool 114 may be comprised of a solid piece of tool material 116 having a second sheet of tool material 118 having a pattern of channels 120 provided therein. The channeled piece 118 is suitably attached, bonded or adhered to the non-channel piece 116 to facilitate even resin flow as described hereinbefore.

Referring now to Fig. 8, alternatively from the tool of Fig. 6, a screen or mesh 122 could be used in place of a channeled piece 118 in Fig. 7. A screen or mesh would thereby be suitably attached, adhered or bonded to the smooth sheet or panel 116 shown in Fig. 7 to facilitate even resin flow as described hereinbefore.

The mold of the present invention is preferably made from a rigid, wear resistant material which is easily cleaned of all resin residue. Such mold materials are well known in the art and include metals, plastics, reinforced plastics, etc.. The semi-rigid tool segments 56, 58 of the present invention can be made from any of a number of materials suitable for the purpose described herein that would be within the knowledge of those skilled in the art, such as the same material as the mold. They are preferably made from a non-elastomeric, non-film material having a modulus of elasticity lower than the material of the mold, however. The semi-rigid tool material is preferably more rigid than the flexible bag material but less rigid than the mold material. Acceptable materials include one or two-ply composites which may be comprised of the same materials as the preform or laminate being processed. The semi-rigid tool is preferably elastic or resilient enough to bend so as to facilitate breaking of cured resin off of the tool segments after curing of the preform is completed.

The couplers 66 are preferably made from the same material as the semi-rigid tool 58, but may be made of other suitable materials as well.

The bagging materials 80, 82 may be any of number of suitable materials known to those skilled in the art, such as thermoplastic polyamide films, polyethylene terephthalate (PET), polyether keytone (PEEK), polyetherimide (PEI), polyether cell foam (PES), etc..

Although the invention has been shown and described with exemplary embodiments thereof, it should be understood by those skilled in the art that the foregoing and various other changes, omissions and additions may be made therein and thereto without departing from the spirit and scope of the invention.

## Claims

1. A method of manufacturing a resin impregnated reinforced article comprising the steps of:
depositing a permeable reinforcing material on a rigid mold;
covering a portion of the material with a plurality of impervious tool segments, the segments being separated by gaps;
bridging the gaps with couplers disposed between the material and the tool segments;
sealing the material from the atmosphere with a flexible, impervious sheet;
placing the material under vacuum; and,
impregnating the material with resin.

2. A method of manufacturing a resin impregnated reinforced article in accordance with claim 1, wherein the permeable reinforcing material is comprised of a laminate.

3. A method of manufacturing a resin impregnated reinforced article in accordance with claim 1, wherein the permeable reinforcing material is comprised of preformed cloth.

4. A method of manufacturing a resin impregnated reinforced article in accordance with claim 1, wherein at least one of the tool segments has channels provided therein for facilitating flow of resin.

5. A method of manufacturing a resin impregnated reinforced article in accordance with claim 1, wherein at least one of the tool segments is comprised of a mesh attached to a panel.

6. A method of manufacturing a resin impregnated reinforced article in accordance with claim 1, wherein at least one of the tool segments is comprised of a semi-rigid material for facilitating cleaning after the impregnation step.

7. A method of manufacturing a resin impregnated reinforced article in accordance with claim 1, wherein at least one of the tool segments is comprised of a semi-rigid material having a modulus of elasticity lower than the mold.

8. A method of manufacturing a resin impregnated reinforced article in accordance with claim 1, further comprising the step of curing the material after the impregnating step.

9. A method of manufacturing a resin impregnated, reinforced article comprising the steps of:
depositing a permeable reinforcing material on a rigid mold
substantially covering the material with a plurality of semi-rigid, impervious reinforcement tool segments, the tool segments being separated by gaps;
bridging the gaps between tool segments with a plurality of couplers disposed between the material and the tool segments and overlapping the tool segments;
sealing the edges of the tool to the mold over the edges of the material with a flexible, impervious sheet so as to form a chamber in which the material is contained;
applying vacuum to the chamber;
connecting the chamber to a source of resin so that the material is impregnated with resin.

10. A method of manufacturing a resin impregnated reinforced article in accordance with claim 9, wherein the permeable reinforcing material is comprised of a laminate.

11. A method of manufacturing a resin impregnated reinforced article in accordance with claim 9, wherein the permeable reinforcing material is comprised of preformed cloth.

12. A method of manufacturing a resin impregnated reinforced article in accordance with claim 9, wherein at least one of the tool segments has channels provided therein for facilitating flow of resin.

13. A method of manufacturing a resin impregnated reinforced article in accordance with claim 9, wherein at least one of the tool segments is comprised of a mesh attached to a panel.

14. A method of manufacturing a resin impregnated reinforced article in accordance with claim 9, wherein at least one of the tool segments is comprised of a semi-rigid material for facilitating cleaning after the impregnation step.

15. A method of manufacturing a resin impregnated reinforced article in accordance with claim 9, wherein at least one of the tool segments is comprised of a semi-rigid material having a modulus of elasticity lower than the mold.

16. A method of manufacturing a resin impregnated reinforced article in accordance with claim 9, further comprising the step of curing the material after the impregnating step.
